# EUROPÄISCHE PATENTANMELDUNG

(11) **EP 4 445 726 A1**
(43) Veröffentlichungstag der Anmeldung: **16.10.2024**
(21) Anmeldenummer: 24169361.3
(22) Anmeldetag: 10.04.2024
(51) Int. Cl.: A01K 5/00, B03C 1/12, B03C 1/033, B01F 27/9212

(54) **MAGNETVORRICHTUNG FÜR EINEN FUTTERMISCHWAGEN ODER EINEN STATIONÄREN FUTTERMISCHER**

(30) Priorität: 14.04.2023 DE 102023109454
(71) Anmelder: Mayer Verwaltungs GmbH & Co. KG, 84529 Tittmoning (DE)
(72) Erfinder: Hauler, Attila, 84508 Burgkirchen (DE)
(74) Vertreter: Flach Bauer & Partner Patentanwälte mbB

(57) **Zusammenfassung**

Die vorliegende Erfindung betrifft eine Magnetvorrichtung für einen Futtermischwagen 1. Die Magnetvorrichtung 10 umfasst zumindest ein Magnet 12 und ein Trennelement 14. Das Trennelement 14 und der zumindest eine Magnet 12 sind relativ zueinander beweglich angeordnet, um von einer ersten Betriebsstellung in eine zweite Betriebsstellung gebracht zu werden.

In der ersten Betriebsstellung ist das Trennelement relativ zu dem zumindest einen Magnet 12 so angeordnet ist, dass das Trennelement 14 den zumindest einen Magnet abschirmt, sodass aus Futtermittel abzuscheidende Metallteile mittels des Magneten 12 auf das Trennelement 14 gezogen und dort festgehalten werden. In der zweiten Betriebsstellung ist das Trennelement 14 von dem zumindest einen Magnet 12 weiter beabstandet ist als in der ersten Betriebsstellung.

## Beschreibung

### Gebiet der Erfindung

Die vorliegende Erfindung betrifft eine Magnetvorrichtung für einen Futtermischwagen oder einen stationären Futtermischer, eine Mischschnecke für einen Futtermischwagen oder einen stationären Futtermischer umfassend eine Magnetvorrichtung, sowie einen entsprechenden Futtermischwagen oder einen stationären Futtermischer. Weiterhin betrifft die vorliegende Erfindung ein Verfahren zum Entfernen von magnetischen Metallteilen aus einem Futtermischwagen bzw. aus einem stationären Futtermischer mittels der Magnetvorrichtung.

### Hintergrund

Futtermischwagen und stationäre Futtermischer dienen in bekannter Weise dazu, Futtermittel in der Form von Grassilage, Maissilage, Heu, Kraftfutter und dergleichen zu mischen. Während ein stationärer Futtermischer ortsfesteingerichtet ist, kann ein Futtermischwagen das gemischte Futtermittel zum Fütterungsort transportieren und dort ausgeben. Zum Mischen weisen Futtermischwagen bzw. stationäre Futtermischer einen Mischbehälter bzw. Futtermischwagenbehälter mit einem Boden und einer Umfangswand (Behälterwand) auf, die sich vom Boden aus in überwiegend vertikaler oder schräg verlaufender Richtung nach oben erstreckt. Das Mischen erfolgt mittels einer oder mehrerer Mischschnecken, die innerhalb des Mischbehälters/Futtermischwagenbehälters mit meist vertikaler Drehachse angeordnet sind. Die Mischschnecken haben dabei üblicherweise eine konische Außenkontur, d. h. der Schneckendurchmesser ist im bodennahen Bereich größer als im oberen Endbereich.

Zudem können die Mischschnecken zumindest einen Magnet aufweisen, welcher die Aufgabe hat, Metallteile, d. h. ferromagnetisches, ferrithaltiges oder teilferrithaltiges Material wie Stahlteile, Stahlspäne, Nägel, Reineisen oder Gusseisen aus dem zu mischenden Futtermittel abzuscheiden und durch die natürlich oder elektrisch erzeugte magnetische Wirkung festzuhalten, so dass eine Verletzung der zu fütternden Tiere durch im Futtermittel enthaltene Metallteile verhindert werden kann. Derartige Mischschnecken sind beispielsweise aus EP 3 959 969 A1 bekannt.

Bei der Positionierung des/der Magnete(n) gibt es die Herausforderung, dass der Mischvorgang durch den/die Magnet(e) nicht gestört werden soll. Zugleich muss der zumindest eine Magnet so angeordnet werden, dass die abzuscheidenden Metallteile effektiv abgeschieden werden und trotz der Rotation der Mischschnecke an dem zumindest einen Magnet haften bleiben, um einen möglichst hohen Abscheidegrad zu ermöglichen.

Ein möglichst hoher Abscheidegrad kann beispielsweise durch die Nutzung sehr starker Magnete erzielt werden. Insbesondere im Falle von Permanentmagneten erschwert die Nutzung starker Magnete jedoch die Entnahme der abgeschiedenen Metallteile, da diese sehr fest an dem Permanentmagnet anhaften. Dieses starke Anhaften und die damit verbundenen notwendigen hohen Kräfte zum Lösen der abgeschiedenen Metallteile erhöht das Verletzungsrisiko (bspw. durch Abrutschen und unbeabsichtigten Kontakt mit z.T. messerbesetzen Wendeln der Mischschnecke) sowie das Risiko die Mischschnecke oder den Futtermischwagenbehälter zu beschädigen. Zudem ist das Lösen der abgeschiedenen Metallteile oftmals nur durch nicht-magnetische Werkzeuge, beispielsweise aus Kupfer oder Aluminium möglich.

Die Nutzung von Elektromagneten, die zur Entnahme der abgeschiedenen Metallteile abgeschaltet werden können, ist oftmals unerwünscht oder nicht möglich, da die notwendige elektrische Energie zu den Elektromagneten auf der rotierenden Mischschnecke geleitet werden müsste.

Die Aufgabe der vorliegenden Erfindung ist es daher, einen hohen Abscheidegrad zu erreichen und zugleich die Entnahme der abgeschiedenen Metallteile zu vereinfachen.

### Beschreibung der Erfindung

Die obige Aufgabe wird durch eine Magnetvorrichtung für einen Futtermischwagen oder einen stationären Futtermischer, eine Mischschnecke für einen Futtermischwagen oder einen stationären Futtermischer sowie einen entsprechenden Futtermischwagen und einen stationären Futtermischer gemäß den unabhängigen Ansprüchen gelöst. Zudem wir die Aufgabe durch ein Verfahren zum Entfernen von magnetischen Metallteilen aus einem Futtermischwagen gelöst. Weitere Aspekte der Erfindung sind in den abhängigen Ansprüchen genannt sowie nachfolgend beschrieben.

Insbesondere wird die Aufgabe durch eine Magnetvorrichtung für einen Futtermischwagen oder einen stationären Futtermischer gelöst. Die Magnetvorrichtung kann dazu eingerichtet sein an einer Mischschnecke des Futtermischwagens (bzw. des stationären Futtermischers), in einem Mischbehälter des Futtermischwagens (insbesondere an einer Behälterwand, vorzugsweise im Bodenbereich der Behälterwand) oder des stationären Futtermischers, in einem Austragsbereich oder an einen Austragsmittel des Futtermischwagens oder des stationären Futtermischers, wie beispielsweise an einem Austragsförderband des Futtermischwagens oder des stationären Futtermischers und/oder an einer anderen geeigneten Stelle des Futtermischwagens oder des stationären Futtermischers angeordnet zu werden. Ein entsprechender Futtermischwagen oder stationärer Futtermischer kann mehrere nachfolgend beschriebene Magnetvorrichtungen umfassen. Diese können an unterschiedlichen Stellen und/oder unterschiedlichen Komponenten des Futtermischwagens oder des stationären Futtermischers angeordnet sein (z.B. an einer Mischschnecke, in einem Mischbehälter (bzw. an einer Behälterwand), und/oder an einem Austragsförderband). Ein Austragsmittel, wie beispielsweise ein Austragsförderband dient dazu das gemischte Futtermittel (automatisiert) aus dem Mischbehälter des Futtermischwagens (Futtermischwagenbehälter) zu fördern, um beispielsweise eine Fütterung zu vollziehen. Es versteht sich, dass das Fördern des Futters aus dem Futtermischwagen auch auf andere Weise automatisiert erfolgen kann. Hierzu können entsprechende Austragsmittel (z.B. Förderschnecken, Schieber, Förderbänder, ...) vorgesehen sein. Die Magnetvorrichtung kann an einem solchen Austragsmittel angeordnet sein.

Die Magnetvorrichtung umfasst zumindest ein Magnet und ein Trennelement, wobei das Trennelement und der zumindest eine Magnet relativ zueinander beweglich angeordnet sind, um von einer ersten Betriebsstellung in eine zweite Betriebsstellung gebracht zu werden. Eine Betriebsstellung zeichnet sich durch die räumliche Orientierung des Trennelements relativ zu dem zumindest einen Magnet aus, wobei eine Änderung der Betriebsstellung (z.B. von der ersten zu der zweiten Betriebsstellung) durch eine Bewegung des zumindest einen Magnet und/oder durch eine Bewegung des Trennelements erfolgen kann. Durch die Änderung der Betriebsstellung wird das am Trennelement wirkende Magnetfeld geändert.

Insbesondere kann die Magnetvorrichtung einen einzigen Magnet, oder eine Vielzahl (zumindest zwei) von Magneten umfassen, die zusammenwirken. Ist eine Vielzahl von Magneten Teil der Magnetvorrichtung, können diese Magnete miteinander verbunden sein, beispielsweise verklebt. Ebenso ist es möglich, dass die Vielzahl von Magneten aneinander aufgrund der wirkenden Magnetkräfte haften. Zudem können die Magnete in einer entsprechenden Magnethalterung in der Magnetvorrichtung gehalten sein. Der Magnet/die Magnete sind insbesondere Permanentmagnete, wie Neodym-Magnete oder Ferrit-Magnete. Der Magnet/die Magnete können auch zumindest einen Elektromagnet umfassen.

In der ersten Betriebsstellung ist das Trennelement relativ zu dem zumindest einen Magnet so angeordnet, dass das Trennelement den zumindest einen Magnet abschirmt. Die Abschirmung ist insbesondere räumlich, sodass aus Futtermittel abzuscheidende Metallteile mittels des Magneten (bzw. der Magnete) auf das Trennelement gezogen und dort festgehalten werden, wenn die Magnetvorrichtung beispielsweise in einem Futtermischwagenbehälter (z.B. an einer Mischschnecke) angeordnet ist. Mithin kann verhindert werden, dass die abzuscheidenden Metallteile unmittelbar an dem Magnet/den Magneten anhaften. Das Trennelement trennt also die abzuscheidenden Metallteile von dem/den Magneten.

Insbesondere kann das Trennelement so beschaffen sein, dass es das Magnetfeld des/der Magnete nicht oder nicht wesentlich abschirmt oder verändert.

In der zweiten Betriebsstellung ist das Trennelement von dem zumindest einen Magnet weiter beabstandet als in der ersten Betriebsstellung. Das an dem Trennelement wirkende Magnetfeld ist in der zweiten Betriebsstellung mithin schwächer als in der ersten Betriebsstellung. Die an bzw. auf dem Trennelement aufgrund des wirkenden Magnetfelds festgehalten Metallteile können mithin in der zweiten Betriebsstellung leichter entfernt werden als in der ersten Betriebsstellung.

Beispielsweise kann das Magnetfeld in der zweiten Betriebsstellung soweit abgeschwächt sein, dass ferromagnetische Metallteile ohne Werkzeug von dem Trennelement (d.h. von Hand) entnommen werden können. Ebenso kann das Magnetfeld in der zweiten Betriebsstellung soweit abgeschwächt sein, dass die Metallteile von dem Trennelement abfallen bzw. abrutschen.

In einem Aspekt der Erfindung kann das am Trennelement wirkende Magnetfeld in der zweiten Betriebsstellung gegenüber dem am Trennelement wirkende Magnetfeld in der ersten Betriebsstellung um zumindest den Faktor 2, oder um zumindest den Faktor 4, oder um zumindest den Faktor 8 oder um zumindest den Faktor 16 reduziert sein. Die auf die abzuscheidenden Metallteile wirkende Magnetkraft reduziert sich in der zweiten Betriebsstellung entsprechend. Grundsätzlich ist die Magnetkraft zwischen zwei magnetischen Körpern umgekehrt proportional dem Quadrat des Abstands zwischen den Magnetpolen bzw. den Körpern. Um das wirkende Magnetfeld bzw. die Magnetkraft beispielsweise um den Faktor 4 zu reduzieren, muss der Abstand zwischen Magnet und Trennelement in der zweiten Betriebsstellung doppelt so groß sein, wie in der ersten Betriebsstellung.

Gemäß einem Aspekt ist das Trennelement schwach magnetisch oder nicht magnetisch. Insbesondere kann das Trennelement aus einem schwach magnetischen Metall, wie beispielsweise Edelstahl (hier beispielsweise 1.4305, 1.4300, 1.4031, 1.4303, 1.4306, 1.4307, 1.4310, 1.4316, 1.4318, 1.4401, 1.4404, 1.4405, 1.4406 oder 1.4021) gefertigt sein. Ebenso kann das Trennelement aus einem nicht magnetischen Metall oder aus einem Kunststoff (Thermoplast, Duroplast oder Elastomer (insbesondere Gummi)) gefertigt sein und/oder diesen umfassen. Zudem kann das Trennelement aus einem nicht oder schwach magnetischen Composite-Material gefertigt sein, wie beispielsweise aus einem faserverstärkten Kunststoff. Ist das Trennelement nicht (oder schwach) magnetisch, haftet es auch in der ersten Betriebsstellung nicht (oder nur sehr leicht) an dem/den Magneten an und kann somit leicht in die zweite Betriebsstellung gebracht werden. Das Entfernen von abzuscheidenden Metallteilen kann somit vereinfacht werden.

Die Magnetvorrichtung kann weiterhin ein Gehäuse umfassen, welches den zumindest einen Magnet zumindest teilweise aufnimmt. Das Trennelement kann Teil des Gehäuses sein. Insbesondere kann das Gehäuse eine Magnethalterung umfassen, welche den Magnet/die Magnete in dem Gehäuse hält. Das Gehäuse kann zudem dazu eingerichtet sein, an einer weiteren Komponente des Futtermischwagens oder des stationären Futtermischers, wie beispielsweise an der Mischschnecke, angeordnet zu werden. Hierfür kann am Gehäuse zumindest eine Befestigungsvorrichtung vorgesehen sein. Beispielsweise kann das Gehäuse an einer Mischschnecke angeschraubt werden. Die Befestigungsvorrichtung kann dann zumindest einen Gewindebolzen umfassen und/oder zumindest eine Aufnahme, die einen entsprechende Gewindebolzen aufnehmen können.

Ebenso ist es möglich, dass das Gehäuse zumindest eine Befestigungsvorrichtung umfasst, welche formschlüssig mit einer korrespondierenden Befestigungsvorrichtung einer Mischschnecke zusammen greifen kann. Beispielsweise können in der Mischschnecke Hinterschnitte (beispielsweise eine T-Nut oder eine Schwalbenschwanzführung) vorgesehen sein, in welche die Befestigungsvorrichtung des Gehäuses eingeführt werden kann, um die Magnetvorrichtung an der Mischschnecke zu befestigen. Ebenso ist es möglich, dass das Gehäuse zumindest einen Hinterschnitt aufweist und eine korrespondierende Befestigungsvorrichtung der Mischschnecke in diesen Hinterschnitt eingeführt wird, um die Magnetvorrichtung an der Mischschnecke zu befestigen.

Das Trennelement kann beispielsweise mittels eines Scharniers an dem Gehäuse angeschlagen sein und somit ein schwenkbarer Teil des Gehäuses sein. Ebenso ist es möglich, dass das Trennelement in einer Führung am Gehäuse gehalten wird, um translatorisch verschoben werden zu können. Entsprechend kann der zumindest eine Magnet in dem Gehäuse beweglich gelagert sein. Beispielweise kann der Magnet innerhalb des Gehäuses verschwenkt werden und/oder translatorisch verschoben werden.

Insbesondere kann der Magnet dazu eingerichtet sein an einer Mischschnecke, in einem Mischbehälter und/oder an einem Austragsmittel (insbesondere Austragsförderband) befestigt zu werden. Die Befestigung kann unmittelbar (direkt) erfolgen oder mittelbar. Für die mittelbare Befestigung kann der zumindest eine Magnet in einer Magnethalterung und/oder in einem Gehäuse gehalten sein, wobei die Magnethalterung und/oder das Gehäuse dazu eingerichtet sein kann an der Mischschnecke, in einem Mischbehälter (insbesondere an der Behälterwand) und/oder an eine Austragsmittel (insbesondere Austragsförderband) befestigt zu werden. Das Trennelement ist in diesem Fall beweglich eingerichtet, um von der ersten Betriebsstellung in die zweite Betriebsstellung gebracht zu werden. Mithin kann das Trennelement relativ zum Magnet (und somit relativ zur Mischschnecke, dem Mischbehälter und/oder dem Austragsmittel (je nach Befestigungsort)) bewegt werden. Die Bewegung kann eine Rotationsbewegung (bzw. Schwenkbewegung) und/oder eine translatorische Bewegung sein. Kombinationen von Rotation und Translation sind ebenso möglich.

Ebenso kann das Trennelement dazu eingerichtet sein an einer Mischschnecke, in einem Mischbehälter und/oder an einem Austragsmittel (insbesondere Austragsförderband) befestigt zu werden. Die Befestigung kann unmittelbar (direkt) erfolgen oder mittelbar. Für die mittelbare Befestigung kann das zumindest eine Trennelement an einem Gehäuse bzw. Gehäuseteil gehalten sein, wobei das Gehäuse dazu eingerichtet sein kann an der Mischschnecke, in einem Mischbehälter und/oder an einem Austragsmittel befestigt zu werden. Der Magnet kann in diesem Fall beweglich eingerichtet sein, um von der ersten Betriebsstellung in die zweite Betriebsstellung gebracht zu werden. Mithin kann der Magnet relativ zum Trennelement (und somit relativ zur Mischschnecke, dem Mischbehälter und/oder dem Austragsmittel (je nach Befestigungsort)) bewegt werden. Die Bewegung kann eine Rotationsbewegung (bzw. Schwenkbewegung) und/oder eine translatorische Bewegung sein. Kombinationen von Rotation und Translation sind ebenso möglich.

Das Trennelement kann zumindest ein Mitnahmeelement umfassen. Insbesondere kann das zumindest eine Mitnahmeelement von dem Trennelement vorstehen, in eine Richtung, die in der ersten Betriebsstellung von dem zumindest einen Magnet weg weist. Das Mitnahmeelement kann beispielsweise eine Rippe, ein Steg, eine Kante, ein Pin, ein Bolzen und/oder dergleichen sein. Wird das Trennelement von der ersten in die zweite Betriebsstellung gebracht, kann das zumindest eine Mitnahmeelement verhindern, dass abgeschiedene und an dem Trennelement anhaftende Metallteile von dem Trennelement abrutschen und sodann unmittelbar an dem Magnet anhaften. Das Mitnahmeelement sorgt also dafür, dass anhaftende Metallteile mit dem Trennelement von der ersten in die zweite Betriebsstellung mit bewegt werden. Somit kann das Entfernen dieser anhaftenden Metallteile aus einem Futtermischwagen bzw. von der Magnetvorrichtung vereinfacht werden.

Die Magnetvorrichtung kann weiterhin ein Griffelement umfassen. Dieses Griffelement kann so mit dem zumindest einen Magnet oder dem Trennelement gekoppelt sein, um den zumindest einen Magnet oder das Trennelement von der ersten Betriebsstellung in die zweite Betriebsstellung bewegen zu können. Insbesondere kann das Griffelement abnehmbar sein. Ein abnehmbares Griffelement kann beispielsweise nur mit dem Trennelement gekoppelt werden, um das Trennelement von der ersten in die zweite Betriebsstellung (und zurück) zu bewegen. Für den normalen Mischbetrieb des Futtermischwagens kann das Trennelement abgenommen werden, um den Mischbetrieb nicht zu stören. Das abnehmbare Griffelement kann beispielsweise auf das Trennelement aufgesteckt, mit dem Trennelement verrastet oder in sonstiger Weise reversibel verbunden werden.

In einem Aspekt der Erfindung kann das Griffelement (abnehmbar oder festverbunden) als Schwenkhebel ausgebildet sein. Ein Verschwenken des Griffelements würde sodann zu einer entsprechenden Schwenkbewegung bzw. Rotationsbewegung des Magneten bzw. des Trennelements führen. Ebenso kann das Griffelement dazu dienen eine translatorische Bewegung des Magneten oder des Trennelement zu vereinfachen. Hierzu kann beispielsweise an dem Griffelement gezogen werden, sodass auch der Magnet bzw. das Trennelement verschoben wird.

Weiterhin kann zwischen dem Griffelement und dem zumindest einen Magnet oder zwischen dem Griffelement und dem Trennelement ein Übersetzungselement angeordnet sein. Das Übersetzungselement (beispielsweise ein Hebel) dient dazu, die Kraft, die auf das Griffelement aufgebracht werden muss um den zumindest einen Magnet/das Trennelement von der ersten in die zweite Betriebsstellung zu bewegen zu reduzieren. So kann der Wechsel von der ersten in die zweite Betriebsstellung auch dann noch von Hand vollzogen werden, wenn sehr starke Magnete verwendet werden und/oder sehr viele Metallteile abgeschieden worden sind.

Die Magnetvorrichtung kann zudem ein Rastelement umfassen. Das Rastelement kann dazu eingerichtet sein den zumindest einen Magnet oder das Trennelement in der ersten und/oder zweiten Betriebsstellung zu fixieren. Dies vereinfacht zum einen das Abscheiden von Metallteilen in der ersten Betriebsstellung und zum anderen das Entfernen abgeschiedener Metallteile in der zweiten Betriebsstellung. Das Rastelement kann beispielsweise magnetisch sein und mit dem Magnet der Magnetvorrichtung zusammenwirken, um die erste Betriebsstellung zu sichern. Alternativ kann das Rastelement formschlüssig mit einem korrespondierenden Rastelement zusammengreifen, um die erste und/oder zweite Betriebsstellung zu sichern.

Das Trennelement kann den zumindest einen Magnet in der ersten Betriebsstellung auf zumindest einer Seite, oder auf zumindest zwei Seiten, auf zumindest drei Seiten, auf zumindest vier Seiten, auf zumindest fünf Seiten, oder auf zumindest sechs Seiten abschirmen.

Schirmt das Trennelement den zu mindestens ein Magnet auf einer Seite ab, kann es beispielsweise als im wesentlichen ebener Deckel eines Gehäuses der Magnetvorrichtung bereitgestellt sein. Schirmt das Trennelement den zumindest einen Magnet auf mehreren Seiten, beispielsweise auf zwei, auf drei, auf vier, auf fünf, oder auf sechs Seiten, ab, kann es ein gebogenes Blechteil, ein (Spritz-)gussteil oder ein Tiefziehteil sein. Ebenso ist es möglich, dass das Trennelement aus mehreren Einzelteilen zusammengesetzt ist. Die Einzelteile können miteinander verbunden (beispielsweise verschweißt, verklebt, verschraubt, vernietet, ...) sein, um das Trennelement zu bilden.

Weiterhin wird die Aufgabe durch eine Mischschnecke, insbesondere durch eine Vertikalmischschnecke, für einen Futtermischwagen oder einen stationären Futtermischer gelöst. Die Mischschnecke umfasst eine um eine Drehachse drehbare Schneckenwelle und zumindest eine sich spiralförmig um die Schneckenwelle herum erstreckende erste Schneckenwendel. Weiterhin umfasst die Mischschnecke zumindest eine Magnetvorrichtung, wie sie oben beschrieben ist. Die Magnetvorrichtung dient zum Abscheiden von Metallteilen aus einem Futtermittel während des Mischvorgangs. Durch die Anbringung der Magnetvorrichtung an der Mischschnecke wird die Magnetvorrichtung beim Drehen der Mischschnecke mit dieser mitbewegt. So können im zumischenden Futtermittel enthaltene magnetische Metallteile effektiv abgeschieden und schließlich entfernt werden.

Insbesondere kann auf der ersten Schneckenwendel der Mischschnecke ein über die erste Schneckenwendel nach oben vorstehendes Rampenelement angeordnet sein, wobei die Magnetvorrichtung zumindest teilweise in einem Zwischenraum zwischen der ersten Schneckenwendel und dem Rampenelement, oder in Umdrehungsrichtung der Mischschnecke gesehen hinter und angrenzend an das Rampenelement angeordnet ist. Insbesondere steht die Magnetvorrichtung nach oben maximal so weit wie das Rampenelement über die Schneckenwendel über.

Durch diese Anordnung der Magnetvorrichtung im Bereich der Schneckenwendel können Metallteile besonders wirkungsvoll aus dem zumischenden Futter während des Mischvorgangs abgeschieden werden. Tiere sind dadurch besonders wirkungsvoll vor der unbeabsichtigten Aufnahme von Metallteilen geschützt. Zudem können Schäden durch sich verkeilende Metallteile innerhalb des Futtermischwagens vermieden werden. Darüber hinaus ist die Magnetvorrichtung auf die beschriebene Weise so an der Schneckenwendel angeordnet, dass der Reibungswiderstand zwischen der Mischschnecke und dem Futtermittel nicht oder nicht wesentlich erhöht wird.

Weiterhin kann die Mischschnecke eine zweite Schneckenwendel umfassen, die der ersten Schneckenwendel in einem Bodenbereich der Mischschnecke voranläuft (bezogen auf die Drehrichtung der Mischschnecke). Die zweite Schneckenwendel kann eine nachlaufende Abschlusskante umfassen, an der die Magnetvorrichtung angeordnet ist. Die nachlaufende Abschlusskannte ist beispielsweise in Bezug auf die zweite Schneckenwendel abgewinkelt (beispielsweise um zumindest 45°, oder zumindest 60° oder zumindest 90°). An dieser Abschlusskante kann die Magnetvorrichtung so angeordnet sein, dass sie nicht über die Schneckenwendel übersteht. Auch so kann eine gute Abscheidung gewährleistet werden und der Mischvorgang wird durch die Magnetvorrichtung nicht bzw. kaum gestört.

Zudem kann die Magnetvorrichtung so an der Mischschnecke angeordnet sein, dass das Trennelement und somit die Fläche, an der die abzuscheidenden Metallteile anhaften im Wesentlichen die gleiche Steigung wie die Schneckenwendel im Nachbarschaftsbereich der Magnetvorrichtung aufweist. Diese Fläche kann fluchtend zur Oberseite der Schneckenwendel oder etwas vertieft hierzu verlaufen (beispielsweise um zumindest 1 cm vertieft, oder zumindest 3 cm vertieft, oder zumindest 5 cm vertieft). Hierdurch gleitet das Futtermittel besonders leicht über die Magnetvorrichtung und etwaige anhaftende Metallteile.

Alternativ hierzu ist es auch möglich, dass die Magnetvorrichtung so an der Mischschnecke angeordnet ist, das das Trennelement und somit die Fläche, an der die abzuscheidenden Metallteile anhaften bezogen auf die Oberfläche der Schneckenwendel im Nachbarschaftsbereich der Magnetvorrichtung um zumindest 45°, oder zumindest 60° oder zumindest 90° abgewinkelt ist. Hierdurch kann auf besonders wirkungsvolle Weise vermieden werden, dass die durch die Magnetvorrichtung abgeschiedenen Metallteile durch das vorbeigleitende Futtermittel wieder vom Magnet abgestreift werden.

Insbesondere kann sich die Magnetvorrichtung (bzw. der zumindest eine Magnet der Magnetvorrichtung) in radialer Richtung über 80 % bis 100 % der Breite der Schneckenwendel erstrecken. Hierdurch kann ein besonders wirkungsvolles Abscheiden von Metallteilen bewirkt werden.

Gemäß einem weiteren Aspekt sind mehrere Magnetvorrichtungen der oben beschriebenen Art vorgesehen, die in radialer Richtung der Mischschnecke relativ zueinander versetzt an der (ersten und/oder zweiten) Schneckenwendel befestigt sind. In diesem Fall müssen sich die Magnetvorrichtungen nicht über die gesamte Breite der Schneckenwendel erstrecken.

Weiterhin wird die Aufgabe durch einen Futtermischwagen gelöst. Der Futtermischwagen kann ein gezogener oder ein selbstfahrender Futtermischwagen sein. Der Futtermischwagen umfasst ein Fahrgestell und einen Futtermischwagenbehälter (auch als Mischwagenbehälter bezeichnet), wobei der Futtermischwagenbehälter auf dem Fahrgestell angeordnet ist.

Der Futtermischwagen umfasst ferner zumindest eine Mischschnecke zum Mischen von Futtermittel und zumindest eine Magnetvorrichtung zum Abscheiden von Metallteilen aus dem Futtermittel während des Mischvorgangs, wobei die Magnetvorrichtung wie oben beschrieben ausgebildet ist.

Weiterhin wird die Aufgabe durch einen Futtermischer gelöst, welcher einen Mischbehälter und eine Mischschnecke zum Mischen von Futtermittel umfasst, wobei die Mischschnecke in dem Mischbehälter angeordnet ist. Der stationäre Futtermischer umfasst zu dem zumindest eine Magnetvorrichtung wie oben beschrieben zum Abscheiden von Metallteilen aus dem Futtermittel während des Mischvorgangs.

Die Magnetvorrichtung kann insbesondere an einer der Mischschnecken bzw. der Mischschnecke des Futtermischwagens, in dem Futtermischwagenbehälter (insbesondere an einer Behälterwand, vorzugsweise im Bodenbereich der Behälterwand), an einem Austragsmittel (insbesondere Austragsförderband) des Futtermischwagens und/oder an einer anderen geeigneten Stelle des Futtermischwagens angeordnet sein. Der Futtermischwagen kann auch mehrere Magnetvorrichtungen umfassen. Diese können an unterschiedlichen Stellen und/oder unterschiedlichen Komponenten des Futtermischwagens angeordnet sein (z.B. an einer Mischschnecke, in einem Mischbehälter (bzw. an einer Behälterwand), und/oder an einem Austragsmittel, insbesondere -förderband).

Weiterhin wird die Aufgabe durch ein Verfahren zum Entfernen von magnetischen Metallteilen aus einem Futtermischwagen oder aus einem stationären Futtermischer gelöst. Das Verfahren umfasst die folgenden Schritte:
Mischen von Futtermittel mittels eines Futtermischwagens oder eines stationären Futtermischers, wie oben beschrieben, wobei die Magnetvorrichtung in der ersten Betriebsstellung ist;
Abscheiden von magnetischen Metallteilen an der Magnetvorrichtung;
Bewegen des zumindest einen Magnets oder des Trennelements von der ersten in die zweite Betriebsstellung, und
Entfernen von abgeschiedenen Metallteilen von der Magnetvorrichtung und aus dem Futtermischwagenbehälter des Futtermischwagens oder aus einem Mischbehälter des stationären Futtermischers.

### Kurzbeschreibung der Figuren

Die beigefügten Figuren zeigen bevorzugte Ausführungsformen der Erfindung. Nachfolgend werden die beigefügten Figuren kurz erläutert. Dabei zeigt
- Fig. 1A: eine schematische Darstellung einer Mischschnecke mit einer Magnetvorrichtung;
- Fig. 1B: eine Detailansicht der Mischschnecke aus Fig. 1B;
- Fig. 1C: eine Variante einer Mischschnecke;
- Fig. 2A: eine schematische Darstellung einer Magnetvorrichtung gemäß einer ersten Ausführungsform;
- Fig. 2B: eine weitere Darstellung der Magnetvorrichtung aus Fig. 2A;
- Fig. 3A: schematische Darstellungen einer Magnetvorrichtung gemäß einer zweiten Ausführungsform;
- Fig. 3B: schematische Darstellungen einer Magnetvorrichtung gemäß einer dritten Ausführungsform;
- Fig. 3C: schematische Darstellungen einer Magnetvorrichtung gemäß einer vierten Ausführungsform;
- Fig. 4A: eine schematische Darstellung einer Magnetvorrichtung gemäß einer fünften Ausführungsform;
- Fig. 4B: eine schematische Darstellung einer Magnetvorrichtung gemäß einer sechsten Ausführungsform;
- Fig. 5: eine schematische Darstellung eines Futtermischwagens;
- Fig. 6: eine schematische Darstellung eines selbstfahrenden Futtermischwagens, und
- Fig. 7: ein schematisches Ablaufdiagramm eines Verfahrens.

### Ausführliche Beschreibung der Figuren

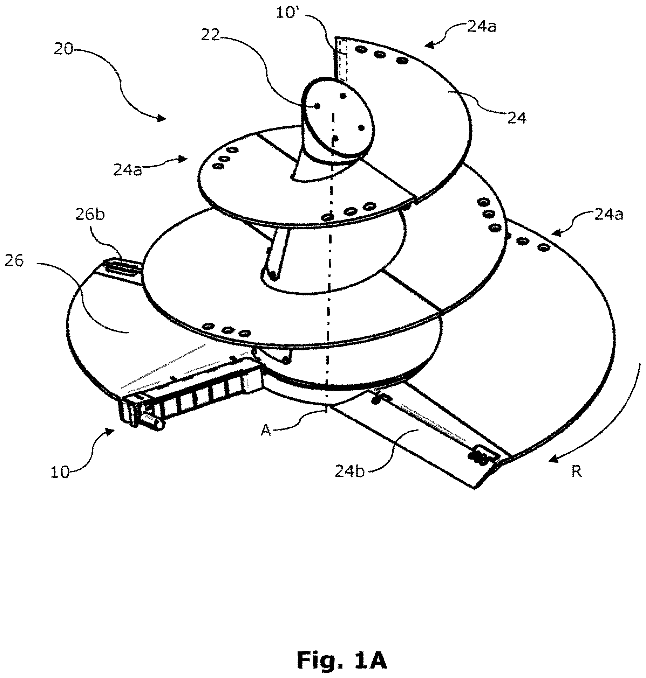

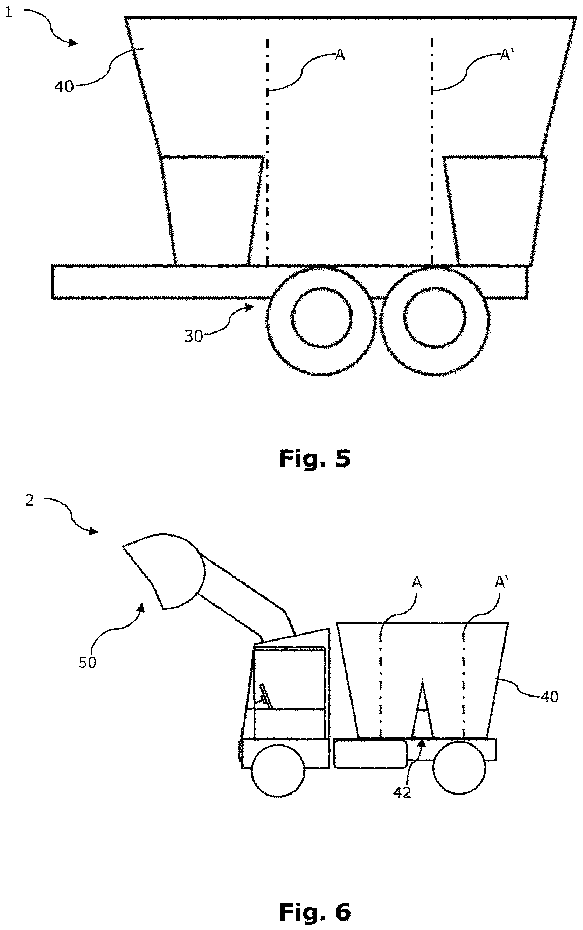

Fig. 1A zeigt eine schematische Darstellung einer Mischschnecke 20 mit einer Magnetvorrichtung 10. Die gezeigte Mischschnecke 20 ist eine Vertikalmischschnecke und kann in einem Futtermischwagen 1, 2, wie er in den Figuren 5 und 6 gezeigt ist eingesetzt sein oder in einem stationären Futtermischer. Die Mischschnecke 20 dient zum Mischen von Futtermitteln, wie Grassilage, Maissilage, Heu, Kraftfutter und dergleichen.

Die Mischschnecke 20 umfasst eine um eine Drehachse A drehbare Schneckenwelle 22. Zum Mischen von Futtermittel wird die Mischschnecke 20 in Rotationsrichtung R gedreht. Um die Schneckenwelle 22 erstreckt sich spiralförmig eine erste Schneckenwendel 24. An der Schneckenwendel 24 können Aufnahmen, beispielsweise Messeraufnahmen 24a angeordnet sein. An den Messeraufnahmen 24a können Messer angebracht werden. Diese Messer werden mit der Schneckenwendel 24 mit rotiert und dienen zum Zerkleinern des Futtermittels. Die Schneckenwendel 24 kann mehrteilig ausgebildet sein, oder integral als ein Teil geformt sein. Zudem kann im Bodenbereich der ersten Schneckenwendel 24 eine Schürfleiste 24b angeordnet sein, die der Schneckenwendel 24 in Rotationsrichtung R voranläuft. Diese Schürfleiste 24b stellt sicher, dass am Boden liegendes Futtermittel von der Mischschnecke 20 aufgenommen und vermischt wird.

Zum Abscheiden von Metallteilen aus dem zumischenden Futtermittel ist an der Mischschnecke 20 eine Magnetvorrichtung 10 angeordnet, die sich mit der Mischschnecke 20 mit dreht. Die hier gezeigte Magnetvorrichtung 10 ist im Bodenbereich der Mischschnecke 20 angeordnet. Alternativ oder zusätzlich kann eine Magnetvorrichtungen 10 am oberen Ende, insbesondere am freien oberen Ende der Schneckenwendel 24 angeordnet sein. Der Bereich zur alternativen oder zusätzlichen Anordnung einer Magnetvorrichtung 10' ist in Fig. 1A mit einer Strichlinie gekennzeichnet.

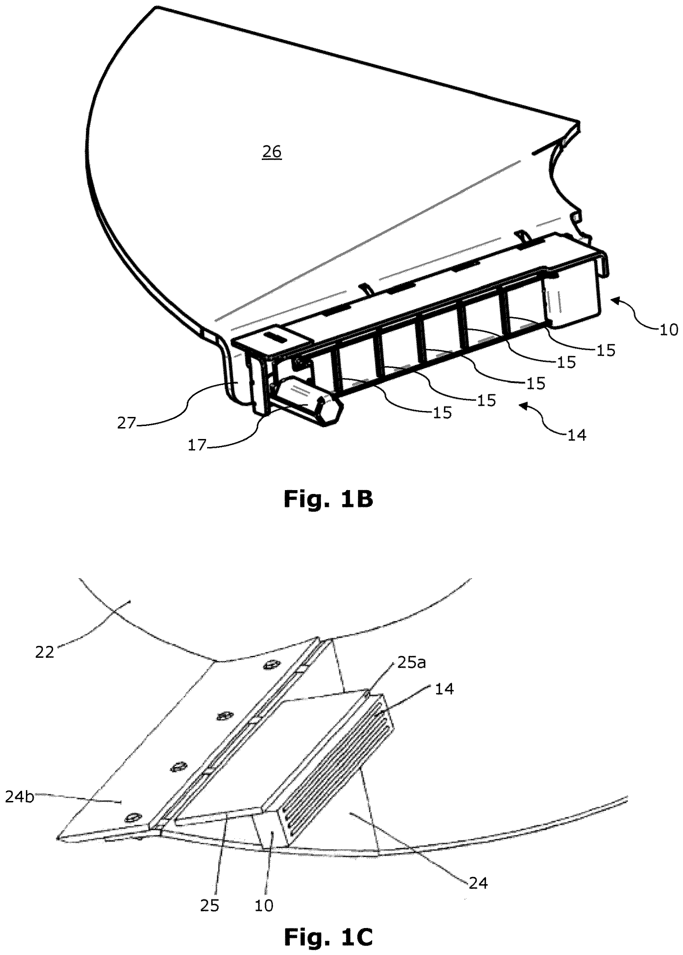

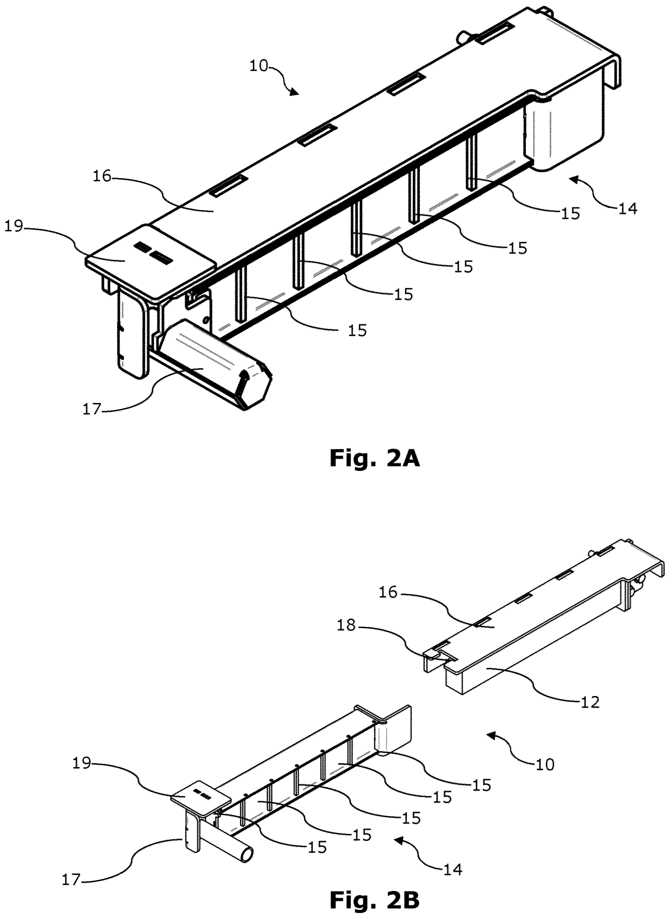

Die in Fig. 1A gezeigte Mischschnecke 20 weist eine zweite Schneckenwendel 26 auf. Die zweite Schneckenwendel 26 ist im Detail in Fig. 1B gezeigt. Die zweite Schneckenwendel 26 läuft der ersten Schneckenwendel 24 in Drehrichtung voraus und ist in einem Bodenbereich der Mischschnecke 20 angeordnet. Auch an der zweiten Schneckenwendel 26 kann im Bodenbereich eine Schürfleiste 26b angeordnet sein, die der zweiten Schneckenwendel 26 in Rotationsrichtung R voranläuft. Die zweite Schneckenwendel 26 umfasst weiterhin eine nachlaufende Abschlusskante 27. An dieser Abschlusskante 27 ist die Magnetvorrichtung 10 angeordnet. Die nachlaufende Abschlusskannte 27 ist in der gezeigten Ausführungsform in Bezug auf die zweite Schneckenwendel 26 um etwa 90° abgewinkelt. Dieser Winkel ist nur exemplarisch. In anderen Ausführungsformen kann die Abschlusskante 27 in einem anderen Winkel (beispielsweise etwa 45°) abgewinkelt sein. Die Magnetvorrichtung 10 ist so an der Abschlusskannte 27 angeordnet, dass sie nicht über die Schneckenwendel 26 übersteht. Die Magnetvorrichtung 10 ist in den Fig. 2A und 2B detailliert dargestellt und mit Bezugnahme auf diese Figuren detailliert beschrieben.

Insbesondere ist in der in Fig. 1A und 1B gezeigten Ausführungsform die Magnetvorrichtung 10 so an der Mischschnecke 20 angeordnet, das ein Trennelement 14 der Magnetvorrichtung 10 und somit die Fläche, an der die abzuscheidenden Metallteile anhaften bezogen auf die Oberfläche der Schneckenwendel im Nachbarschaftsbereich der Magnetvorrichtung um etwa 90° abgewinkelt ist. Hier sind also das Trennelement 14 und die nachlaufende Abschlusskante 27 im Wesentlichen parallel angeordnet.

Fig. 1C zeigt eine weitere Ausführungsform der Mischschnecke 20. Hier ist die Magnetvorrichtung 10 (oder eine weitere Magnetvorrichtung 10) beispielsweise an der ersten Schneckenwendel 24 angeordnet. Zudem ist an der ersten Schneckenwendel 24 ein nach oben vorstehendes Rampenelement 25 angeordnet. Die Magnetvorrichtung 10 ist in dieser Ausführungsform zumindest teilweise in einem Zwischenraum zwischen der ersten Schneckenwendel 24 und dem Rampenelement 25 angeordnet. Ebenso ist es möglich die Magnetvorrichtung 10 in Umdrehungsrichtung R der Mischschnecke 20 gesehen hinter und angrenzend an das Rampenelement 25 anzuordnen.

In Fig. 1C steht die Magnetvorrichtung 10 nach oben maximal so weit wie das Rampenelement 25 über die Schneckenwendel 24 über. In Fig. 1C ist die Magnetvorrichtung etwas vertieft angeordnet, sodass sich zwischen der Oberseite der Magnetvorrichtung 10 und dem Rampenelement 25 ein kleiner Rücksprung 25a ergibt. Der Rücksprung kann beispielsweise zumindest 1 cm, oder zumindest 3 cm, oder zumindest 5 cm betragen.

Die Magnetvorrichtung 10 in Fig. 1C könnte auch gedreht sein, sodass das Trennelement 14 und somit die Fläche, an der die abzuscheidenden Metallteile anhaften im Wesentlichen die gleiche Steigung wie die Schneckenwendel 24 bzw. wie das Rampenelement 25 im Nachbarschaftsbereich der Magnetvorrichtung 10 aufweist.

Fig. 2A ist eine schematische Darstellung einer Magnetvorrichtung 10 gemäß einer ersten Ausführungsform. Diese Magnetvorrichtung 10 ist auch in den Figuren 1A und 1B gezeigt. In Fig. 2A ist die Magnetvorrichtung 10 in der ersten Betriebsstellung, in Fig. 2B ist die Magnetvorrichtung 10 in der zweiten Betriebsstellung gezeigt.

Die Magnetvorrichtung 10 umfasst zumindest einen Magnet 12 und ein Trennelement 14. Das Trennelement 14 und der zumindest eine Magnet 12 sind relativ zueinander beweglich angeordnet. Hier kann das Trennelement 14 auf den Magnet aufgeschoben und von diesem angezogen werden (translatorische Bewegung), um von einer ersten Betriebsstellung (Fig. 2A) in eine zweite Betriebsstellung (Fig. 2B) gebracht zu werden.

In der ersten Betriebsstellung ist das Trennelement 14 so angeordnet, dass es den zumindest einen Magnet 12 abschirmt. Die aus dem Futtermittel abzuscheidenden Metallteile werden also in der ersten Betriebsstellung mittels des Magneten 12 auf das Trennelement 14 gezogen und dort festgehalten, können jedoch nicht unmittelbar zum Magnet 12 gelangen. Das Trennelement 14 trennt die abzuscheidenden Metallteile von dem Magnet 12. In der zweiten Betriebsstellung ist das Trennelement 14 von dem Magnet 12 abgezogen und mithin weiter beabstandet als in der ersten Betriebsstellung. Die anhaftenden und abzuscheidenden Metallteile können zusammen mit dem Trennelement 14 abgezogen werden. Somit können die Metallteile auf einfache Weise entfernt werden.

Das hier gezeigte Trennelement 14 umgreift den Magnet 12 auf fünf Seiten und schirmt diesen somit räumlich von den Metallteilen ab. Da das Trennelement 14 vorzugsweise nicht oder nur schwach magnetisch ist, kann es auf besonders einfache Art von dem Magnet abgezogen werden. Hier kann das Trennelement 14 beispielsweise aus Edelstahl (z.B. 1.4301) gefertigt sein.

Die Magnetvorrichtung 10 umfasst weiterhin ein Gehäuse 16, an welchem der Magnet 12 gehalten ist. Das Gehäuse 16 dient der Befestigung an einer Mischschnecke, an einer Behälterwand und/oder an einem Austragsmittel, wie einem Austragsförderband.

Auf dem Trennelement 14 sind mehrere Mitnahmeelemente 15 angeordnet (hier in Form von Stegen). Die Mitnahmeelemente 15 stehen von dem Trennelement 14 vor, in eine Richtung, die in der ersten Betriebsstellung von dem zumindest einen Magnet 12 weg weist. Die Mitnahmeelemente verhindern, dass anhaftende Metallteile von dem Trennelement abrutschen und auf den Magnet 12 gezogen werden, wenn das Trennelement 14 von der ersten in die zweite Betriebsstellung gebracht wird.

Die Magnetvorrichtung umfasst weiterhin ein Griffelement 17, welches mit dem Trennelement 14 gekoppelt bzw. verbunden ist. Es dient dazu das Trennelement 14 zu greifen und von der ersten Betriebsstellung in die zweite Betriebsstellung zu bewegen. Das Griffelement 17 kann mit dem Trennelement 14 fest verbunden oder abnehmbar sein. Ein abnehmbares Griffelement kann beispielsweise nur mit dem Trennelement 14 gekoppelt werden, um das Trennelement von der ersten in die zweite Betriebsstellung (und zurück) zu bewegen. Für den normalen Mischbetrieb des Futtermischwagens kann das Trennelement 14 abgenommen werden.

Das Griffelement 17 kann auf das Trennelement 14 aufgesteckt, mit dem Trennelement verrastet oder in sonstiger Weise reversibel verbunden werden (z.B. angeschraubt, Splint-gesichert, mittels Bajonettverschluss).

Die Magnetvorrichtung 10 umfasst zudem ein Rastelement 19 und ein komplementäres Rastelement 18. Das Rastelement 19 ist an dem Trennelement 14 vorgesehen und dazu eingerichtet das Trennelement 14 in der ersten Betriebsstellung zu fixieren. Das in den Fig. 2A und 2B dargestellte Rastelement 19 kann formschlüssig mit einem korrespondierenden Rastelement 18 des Gehäuses 16 zusammengreifen, um die erste Betriebsstellung zu sichern.

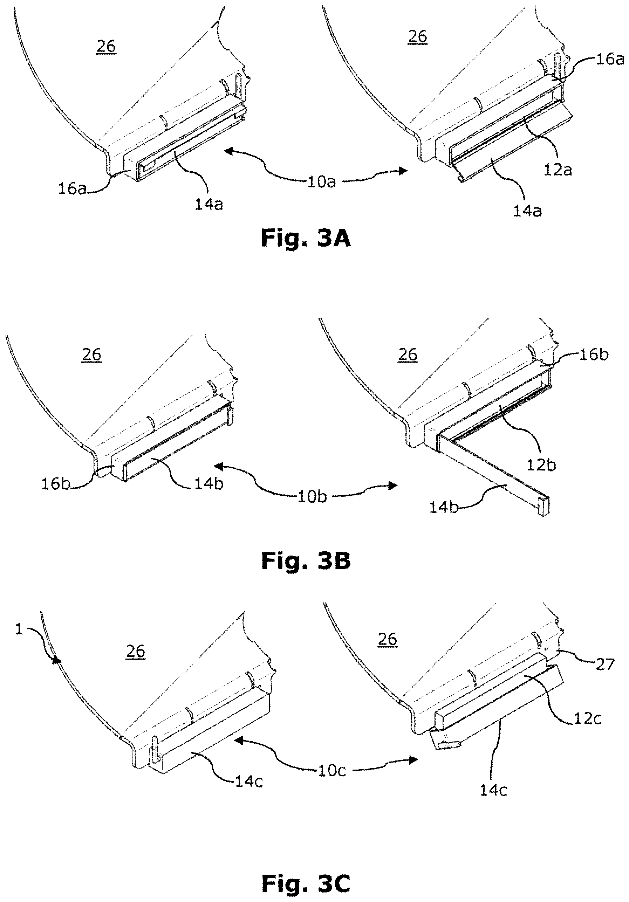

Die Figuren 3A bis 3C zeigen weitere schematische Darstellungen von möglichen Magnetvorrichtung 10a, 10b, 10c, bei denen das Trennelement 14a, 14b, 14c relativ zum Magnet 12a, 12b, 12c bewegt wird (Schwenkbewegung). Die Magnetvorrichtungen sind hier exemplarisch wie mit Bezug zu Fig. 1A und 1B beschrieben an einer Schneckenwendel 26 angeordnet, können jedoch auch an anderen Komponenten eines Futtermischwagens oder eines stationären Futtermischers angeordnet werden. In der linken Darstellung ist die erste Betriebsstellung und in der rechten Darstellung die zweite Betriebsstellung gezeigt. In den Darstellungen der Figuren 3A bis 3C wird das Trennelement 14a, 14b, 14c durch eine Schwenkbewegung von der ersten in die zweite Betriebsstellung gebracht. In Fig. 3A ist das Trennelement 14a an seiner Längsseite mit einem Gehäuse 16a schwenkbar verbunden. Das Trennelement 14a schirmt den Magnet 12a an einer Seite ab. An den übrigen Seiten ist der Magnet 12a von dem Gehäuse 16a umschlossen.

In Fig. 3B ist das Trennelement 14b an seiner Querseite mit einem Gehäuse 16b schwenkbar verbunden. Das Trennelement 14b schirmt den Magnet 12b an einer Seite ab. An den übrigen Seiten ist der Magnet 12b von dem Gehäuse 16b umschlossen.

In Fig. 3C ist das Trennelement 14c an seiner Längsseite mit dem Magnet 12c oder einer Grundplatte (nicht gezeigt) schwenkbar verbunden. Das Trennelement 14c schirmt den Magnet 12c an fünf Seite ab. Rückseitig liegt der Magnet 12c an der Abschlusskante 27 der Schneckenwendel 26 an.

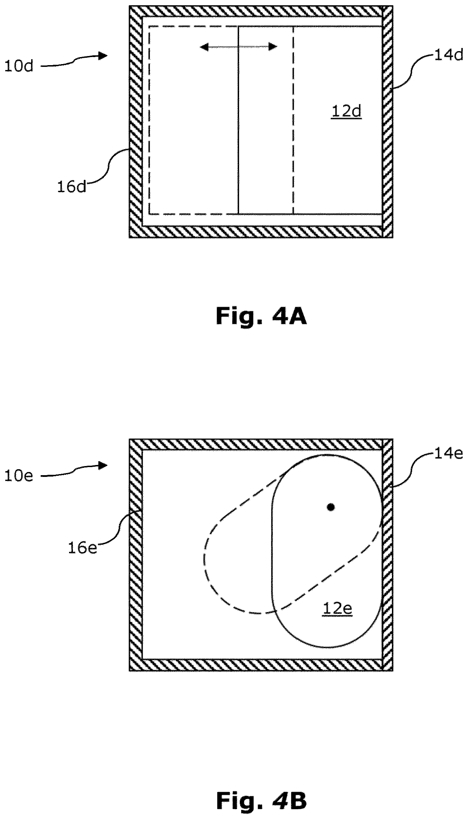

Die Figuren 4A und 4B zeigen weitere schematische Darstellungen von möglichen Magnetvorrichtung 10d und 10e in einer Schnittansicht. In diesen Magnetvorrichtung 10d und 10e wird der Magnet 12d, 12e relativ zum Trennelement 12d, 12e bewegt. Das Trennelement 12d, 12e kann also unbeweglich mit dem Gehäuse 16d, 16e verbunden sein. In Fig. 4A kann der Magnet 12d translatorisch vom Trennelement 12d wegbewegt werden. In der ersten Betriebsstellung liegt der Magnet 12d an dem Trennelement 14d an. In der zweiten Betriebsstellung (gestrichelte Darstellung des Magnet 12d) sind der Magnet 12d und das Trennelement 14d voneinander beabstandet. Anhaftende Metallteile können in der zweiten Betriebsstellung leicht entfernt werden. In Fig. 4B kann der Magnet 12e rotatorisch vom Trennelement 12e wegbewegt (verschwenkt) werden. In der ersten Betriebsstellung liegt der Magnet 12e an dem Trennelement 14e an. In der zweiten Betriebsstellung (gestrichelte Darstellung des Magnet 12e) sind der Magnet 12e und das Trennelement 14e voneinander beabstandet. Anhaftende Metallteile können in der zweiten Betriebsstellung leicht entfernt werden.

Fig. 5 ist eine schematische Darstellung eines Futtermischwagens 1. Der gezeigte Futtermischwagen 1 ist ein gezogener Futtermischwagen, der an ein Fahrzeug (nicht gezeigt), beispielsweise einen Traktor, angehängt werden kann. Die Erfindung ist nicht auf gezogene Futtermischwägen beschränkt, sondern betrifft auch angetriebene und (selbst-)fahrende Futtermischwägen, wie in Fig. 6 gezeigt. Der Futtermischwagen 1 umfasst ein Fahrgestell 30 und einen Futtermischwagenbehälter 40, wobei der Futtermischwagenbehälter 40 auf dem Fahrgestell 30 angeordnet ist. In dem Futtermischwagenbehälter 40 ist zumindest eine Mischschnecke (hier zwei), umfassend eine Magnetvorrichtung, angeordnet. Die zumindest eine Mischschnecke kann um die Achse A, A' rotieren, um Futtermittel in dem Futtermischwagenbehälter 40 zu mischen.

Fig. 6 zeigt eine schematische Darstellung eines selbstfahrenden Futtermischwagens 2. Dieser umfasst einen Futtermischwagenbehälter 40, sowie eine Austragvorrichtung 42 zur Ausgabe von Futtermittel. Zudem umfasst dieser selbstfahrende Futtermischwagen 2 eine Futteraufnahmevorrichtung 50. Diese Futteraufnahmevorrichtung 50 kann eine Silage-Fräse sowie eine Magnetvorrichtung umfassen. In dem Futtermischwagenbehälter 40 ist zumindest eine Mischschnecke (hier zwei), umfassend eine Magnetvorrichtung, angeordnet. Die zumindest eine Mischschnecke kann um die Achse A, A' rotieren, um Futtermittel in dem Futtermischwagenbehälter 40 zu mischen.

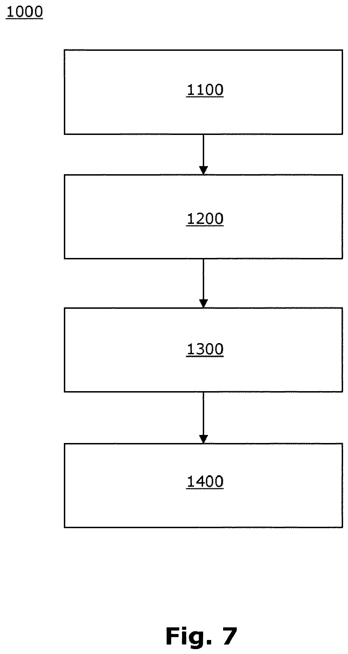

Fig. 7 ein schematisches Ablaufdiagramm eines Verfahrens 1000 zum Entfernen von magnetischen Metallteilen aus einem Futtermischwagen 1, 2 oder aus einem stationären Futtermischer. Das Verfahren umfassend die folgenden Schritte:
Mischen 1100 von Futtermittel mittels eines Futtermischwagens 1, 2 oder eines stationären Futtermischers, wobei die Magnetvorrichtung in der ersten Betriebsstellung ist;
Abscheiden 1200 von magnetischen Metallteilen an der Magnetvorrichtung 10;
Bewegen 1300 des zumindest einen Magnets 12 oder des Trennelements 14 von der ersten in die zweite Betriebsstellung, und
Entfernen 1400 von abgeschiedenen Metallteilen von der Magnetvorrichtung 10 und aus dem Futtermischwagenbehälter 40 des Futtermischwagens 1, 2 oder aus einem Mischbehälter eines stationären Futtermischers.

Optional kann die Mischschnecke vor dem Bewegen 1300 des zumindest einen Magnets 12 oder des Trennelements 14 von der ersten in die zweite Betriebsstellung in eine Stellung gebracht werden, von der aus ein Griffelement der Magnetvorrichtung von außerhalb des Futtermischwagens/des stationären Futtermischers gut zugänglich ist. Beispielsweise kann die Mischschnecke in eine Position verfahren werden, in der das Griffelement vor einem Futterauswurf des Mischwagenbehälters/Mischbehälters positioniert ist. Der Futterauswurf ist beispielsweise eine Öffnung, aus der das gemischte Futtermittel (z.B. mittels eines Austragsförderbands) ausgegeben bzw. entnommen werden kann.

Die vorliegende Erfindung kann natürlich auch auf andere Weise als die hierin dargelegten ausgeführt werden, ohne dass dadurch wesentliche Merkmale der Erfindung beeinträchtigt werden. Die vorliegenden Ausführungsformen sind in jeder Hinsicht als anschaulich und nicht einschränkend zu betrachten, und alle Änderungen, die in den Bedeutungs- und Äquivalenzbereich der beigefügten Ansprüche fallen, sollen darin eingeschlossen sein.

### Bezugszeichenliste

- 1, 2: Futtermischwagen
- 10: Magnetvorrichtung
- 10': Magnetvorrichtung
- 12: Magnet
- 14: Trennelement
- 15: Mitnahmeelement
- 16: Gehäuse
- 17: Griffelement
- 18: komplementäres Rastelement
- 19: Rastelement
- 20: Mischschnecke
- 22: Schneckenwelle
- 24: Schneckenwendel (erste)
- 24a: Messeraufnahme
- 24b: Schürfleiste
- 25: Rampenelement
- 25a: Rücksprung
- 26: Schneckenwendel (zweite)
- 26b: Schürfleiste
- 27: Abschlusskante
- 30: Fahrgestell
- 40: Futtermischwagenbehälter
- 42: Austragsvorrichtung
- 50: Futteraufnahmevorrichtung
- A, A': Drehachse
- R: Rotationsrichtung

## Patentansprüche

1. Magnetvorrichtung (10) für einen Futtermischwagen (1) oder einen stationären Futtermischer, umfassend
zumindest ein Magnet (12); und
ein Trennelement (14), wobei
das Trennelement (14) und der zumindest eine Magnet (12) relativ zueinander beweglich angeordnet sind, um von einer ersten Betriebsstellung in eine zweite Betriebsstellung gebracht zu werden, wobei
das Trennelement (14) in der ersten Betriebsstellung relativ zu dem zumindest einen Magnet (12) so angeordnet ist, dass das Trennelement (14) den zumindest einen Magnet abschirmt, sodass aus Futtermittel abzuscheidende Metallteile mittels des Magneten (12) auf das Trennelement (14) gezogen und dort festgehalten werden, und wobei
in der zweiten Betriebsstellung das Trennelement (14) von dem zumindest einen Magnet (12) weiter beabstandet ist als in der ersten Betriebsstellung.

2. Magnetvorrichtung (10) nach Anspruch 1, wobei das Trennelement (14) nicht magnetisch oder schwach magnetisch ist.

3. Magnetvorrichtung (10) nach Anspruch 1 oder 2, wobei die Magnetvorrichtung (10) ein Gehäuse (16) umfasst, welches den zumindest einen Magnet (12) zumindest teilweise aufnimmt, wobei das Trennelement (14) Teil des Gehäuses (16) ist.

4. Magnetvorrichtung (10) nach einem der Ansprüche 1 bis 3, wobei der Magnet (12) dazu eingerichtet ist an einer Mischschnecke (20), in einem Mischbehälter und/oder an einem Austragsmittel befestigt zu werden, und wobei
das Trennelement (14) beweglich eingerichtet ist, um von der ersten Betriebsstellung in die zweite Betriebsstellung gebracht zu werden.

5. Magnetvorrichtung (10) nach einem der Ansprüche 1 bis 4, wobei das Trennelement (14) dazu eingerichtet ist an einer Mischschnecke (20) in einem Mischbehälter und/oder an einem Austragsmittel befestigt zu werden, und wobei der zumindest eine Magnet (12) beweglich eingerichtet ist, um von der ersten Betriebsstellung in die zweite Betriebsstellung gebracht zu werden.

6. Magnetvorrichtung (10) nach einem der Ansprüche 1 bis 5, die Bewegung von der ersten Betriebsstellung in die zweite Betriebsstellung eine Schwenkbewegung und/oder eine translatorische Bewegung umfasst.

7. Magnetvorrichtung (10) nach einem der Ansprüche 1 bis 6, wobei das Trennelement (14) zumindest ein Mitnahmeelement (15) umfasst, wobei das zumindest eine Mitnahmeelement (15) von dem Trennelement (14) vorsteht, in eine Richtung, die in der ersten Betriebsstellung von dem zumindest einen Magnet (12) weg weist.

8. Magnetvorrichtung (10) nach einem der Ansprüche 1 bis 7, wobei
die Magnetvorrichtung weiterhin ein Griffelement (17) umfasst, welches mit dem zumindest einen Magnet (12) oder dem Trennelement (14) gekoppelt ist, um den zumindest einen Magnet (12) oder das Trennelement (14) von der ersten Betriebsstellung in die zweite Betriebsstellung zu bewegen, wobei das Griffelement (17) abnehmbar sein kann, wobei optional
zwischen dem Griffelement und dem zumindest einen Magnet (12) oder dem Trennelement (14) ein Übersetzungselement angeordnet ist.

9. Magnetvorrichtung (10) nach einem der Ansprüche 1 bis 8, weiterhin umfassend ein Rastelement (18, 19), welches den zumindest einen Magnet (12) oder das Trennelement (14) in der ersten und/oder zweiten Betriebsstellung fixiert.

10. Magnetvorrichtung (10) nach einem der Ansprüche 1 bis 9, wobei das Trennelement (14) den zumindest einen Magnet (12) in der ersten Betriebsstellung auf zumindest einer Seite, oder auf zumindest zwei Seiten, auf zumindest drei Seiten, auf zumindest vier Seiten, auf zumindest fünf Seiten, oder auf zumindest sechs Seiten abschirmt.

11. Mischschnecke (20), insbesondere eine Vertikalmischschnecke, für einen Futtermischwagen (1) oder einen stationären Futtermischer, wobei die Mischschnecke (20) folgendes umfasst:
eine um eine Drehachse drehbare Schneckenwelle (22);
zumindest eine sich spiralförmig um die Schneckenwelle (22) herum erstreckende erste Schneckenwendel (24), und
zumindest eine Magnetvorrichtung (10) zum Abscheiden von Metallteilen aus einem Futtermittel während des Mischvorgangs, wobei die Magnetvorrichtung (10) gemäß einem der voranstehenden Ansprüche ausgebildet ist und beim Drehen der Mischschnecke (20) mit dieser mitbewegt wird.

12. Mischschnecke (20) nach Anspruch 11, wobei
auf der ersten Schneckenwendel (24) ein über die erste Schneckenwendel (24) nach oben vorstehendes Rampenelement (25) angeordnet ist, und wobei
die Magnetvorrichtung (10) zumindest teilweise in einem Zwischenraum zwischen der ersten Schneckenwendel (24) und dem Rampenelement (25), oder
in Umdrehungsrichtung der Mischschnecke (20) gesehen hinter und angrenzend an das Rampenelement (25) angeordnet ist, wobei
die Magnetvorrichtung (10) nach oben maximal so weit wie das Rampenelement (25) über die Schneckenwendel (24) übersteht, und wobei optional
die Mischschnecke (20) eine zweite Schneckenwendel (26) umfasst, die der ersten Schneckenwendel (24) in einem Bodenbereich der Mischschnecke (20) voranläuft, wobei die zweite Schneckenwendel (26) eine nachlaufende Abschlusskante (27) umfasst, an der die Magnetvorrichtung (10) angeordnet ist.

13. Futtermischwagen (1), umfassend ein Fahrgestell (30) und einen Futtermischwagenbehälter (40), wobei der Futtermischwagenbehälter (40) auf dem Fahrgestell (30) angeordnet ist,
der Futtermischwagen ferner umfassend zumindest eine Mischschnecke (20) zum Mischen von Futtermittel und zumindest eine Magnetvorrichtung (10) nach einem der Ansprüche 1 bis 10 zum Abscheiden von Metallteilen aus dem Futtermittel während des Mischvorgangs.

14. Stationären Futtermischer, umfassend
einen Mischbehälter;
eine Mischschnecke (20) zum Mischen von Futtermittel, wobei die Mischschnecke in dem Mischbehälter angeordnet ist, und
zumindest eine Magnetvorrichtung (10) nach einem der Ansprüche 1 bis 10 zum Abscheiden von Metallteilen aus dem Futtermittel während des Mischvorgangs.

15. Verfahren (1000) zum Entfernen von magnetischen Metallteilen aus einem Futtermischwagen oder einem stationären Futtermischer, das Verfahren umfassend die folgenden Schritte:
Mischen (1100) von Futtermittel mittels eines Futtermischwagens nach Anspruch 13 oder eines stationären Futtermischers nach Anspruch 14, wobei die Magnetvorrichtung (10) in der ersten Betriebsstellung ist;
Abscheiden (1200) von magnetischen Metallteilen an der Magnetvorrichtung (10);
Bewegen (1300) des zumindest einen Magnets (12) oder des Trennelements (14) von der ersten in die zweite Betriebsstellung, und
Entfernen (1400) von abgeschiedenen Metallteilen von der Magnetvorrichtung (10) und aus dem Futtermischwagenbehälter (40) des Futtermischwagens (1, 2) oder aus einem Mischbehälter eines stationären Futtermischers.
